# EUROPEAN PATENT SPECIFICATION

(11) **EP 0 561 066 B1**
(45) Date of publication and mention of the grant of the patent: **04.06.1997**
(21) Application number: 92203933.4
(22) Date of filing: 15.12.1992
(51) Int. Cl.: H04N 7/167

(54) **Pay-TV method and system**
Gebührenfernseh-Verfahren und -System
Méthode et système de télévision payante

(30) Priority: 20.12.1991 NL 9102158
(43) Date of publication of application: 22.09.1993
(73) Proprietor: Koninklijke PTT Nederland N.V., 2509 CH Den Haag (NL)
(72) Inventor: Tan, Han Hiong, NL-2651 VD Berkel en Rodenrijs (NL)

(56) References cited:
- WO-A-91/01611
- GB-A- 871 597
- NL-A- 7 416 457
- US-A- 3 936 593

## Description

### A. BACKGROUND OF THE INVENTION

The invention relates to a method and a system for transmitting signals, in particular TV signals, via FDM channels from a distribution station to subscribers connected thereto. Under consideration, in particular, is the field of 'pay-TV', where only those TV channels (or TV programmes) for which they have paid are made available to subscribers.

It is known to make TV channels available to subscribers entitled thereto (while excluding unentitled subscribers) by enciphering the TV signal at the distribution station end ('head-end') and deciphering it at the subscriber end, only the entitled subscribers being provided with the correct deciphering code.

For instance, US-A-3936593 discloses a secure TV system using a different phase AM scrambling carrier. The scrambler and decoder for the television signal uses a television carrier inverted in phase and subjected to low frequency amplitude modulation to obtain enhance channel security. The carrier amplitude modulation is obtained with a coding signal which is transmitted as a pilot signal in the form of frequency modulation of the carrier. The coding signal is recovered at the decoder with a phase lock network and used to regenerate an unscrambled carrier. The coding signal provides information for special functions such as subscriber access control, or programme selection. The coding signal may be a signal selected of sufficiently low frequency to inhibit production of interference with the television signal.

### B. SUMMARY OF THE INVENTION

The present invention comprises a method and a system for carrying out the method that is based on the insight that if the TV (or other) signal is mixed at the transmission end with a carrier wave, but only the resulting mixing product, without the carrier wave, is transmitted to the subscribers (all of them), the signal cannot be reproduced at the subscriber's premises unless he is provided with said carrier wave or a replica thereof.

In this way, the invention provides a method for transmitting signals, in particular TV signals via FDM channels from a distribution station to subscribers connected thereto, which method is characterised in that, at the distribution station end, a signal to be transmitted via one of the FDM channels is mixed with a carrier wave having a carrier wave frequency unique to said FDM channel and the modulated signal resulting therefrom, excluding said carrier wave signal itself, is transmitted to the subscriber end, together with an auxiliary carrier wave signal having a frequency which bears a fixed relationship to the frequency of said carrier wave signal and at the subscriber end, the auxiliary carrier wave signal is converted back, at least in the case of subscribers entitled to receive said FDM channel, to a carrier wave signal having the original carrier wave frequency of said FDM channel in accordance with the inverse of said fixed relationship.

A first preferred embodiment of the invention provides that the auxiliary carrier wave frequency is a multiple of the carrier wave frequency.

A second preferred embodiment of the invention provides that the auxiliary carrier wave frequency is a fraction of the carrier wave frequency.

It is also possible to achieve in other ways (in conformance with other relationships, functions) the result that the modulated signal and the auxiliary carrier wave signal can be separated correctly from one another at the subscriber end using simple (frequency-separation) means.

### C. REFERENCES

US-A-3 936 593 (76.02.03) GTE LAB. INC.

### D. EXEMPLARY EMBODIMENTS

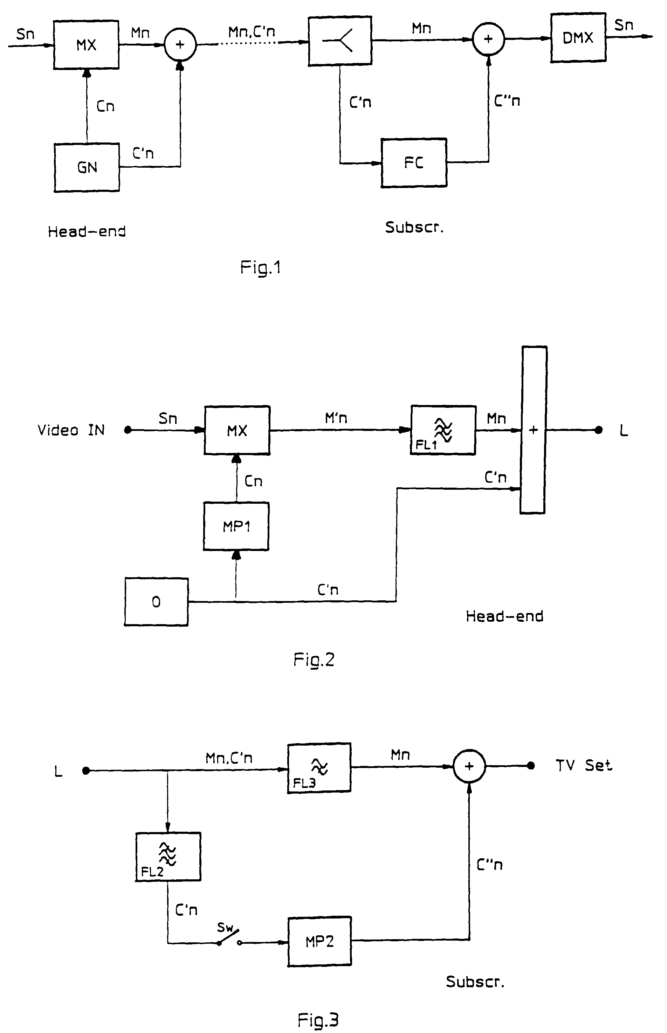

Figure 1 shows a first exemplary embodiment of the invention, which is depicted diagrammatically for the nth FDM channel of a transmission system comprising a plurality of channels. At the 'head-end' end, a video signal Sn is fed to a mixer MX, to which a carrier wave signal Cn is also fed. Said carrier wave signal is generated in a generator GN. The output signal Mn comprises only the products of mixing Cn and Sn and not the carrier wave signal Cn itself. In addition to the carrier wave signal Cn, the generator GN furthermore also produces an 'auxiliary carrier wave' C'n. The latter has a frequency F'n which is (for example) a multiple (A) of the carrier wave frequency Fn. For the latter, it is also possible to choose a frequency F'n which is a fraction (1/A) of the carrier wave frequency Fn. Whatever the relationship between Fn and F'n is, the difference must be such that the modulated signal Mn (which is in the same frequency range as the carrier wave Cn) and the auxiliary carrier wave signal C'n can be separated from one another by simple means.

The auxiliary carrier wave C'n is transmitted, together with the modulated signal Mn, to the subscriber end in order to produce a replica C"n of the carrier wave Cn at that point. At the subscriber end, the modulated signal Mn and the auxiliary carrier wave C'n are separated from one another by means of a filter. If a subscriber is entitled to receive the TV signal Sn transmitted via channel n, the auxiliary carrier wave signal C'n is convened by a frequency convener Fc into a replica C"n of the carrier wave signal Cn having a frequency F"n which is equal to the carrier wave frequency Fn. In the converter FC, use is made of the inverse of the function which indicates the relationship of Fn and F'n at the transmitting end ('head-end'): if F'n=A*Fn, F"n=1/A*F'n; if F'n=(1/A)*Fn, F"n=A*F'n. Generally, F'n=R(Fn) and F"n=R⁻¹(F'n), and as a result F"n=R⁻¹(R(Fn))=Fn; here R specifies the relationship (function) between F'n and Fn, and R⁻¹ the inverse thereof. The replica signal C''n can then be used to demodulate the modulated signal Mn (by means of the demodulator DMX of the connected TV set) to produce the original video signal Sn. In the case of unentitled subscribers, the converter FC is 'disabled', as a result of which no replica signal C''n can be produced and demodulation is impossible. In the case of subscribers who are in fact entitled, the converter FC is 'enabled', as a result of which the replica signal C''n can be produced from the auxiliary carrier wave signal C'n, thereby making demodulation of Mn possible.

Figure 2 and 3 show a more detailed elaboration of the concept shown in Figure 1, Figure 2 in relation to the transmission end and Figure 3 in relation to the subscriber end. In Figure 2, the generator (GN in Figure 1) for generating the carrier wave signal Cn and the auxiliary carrier wave signal C'n is formed by an oscillator O and a (frequency) multiplier MP1. The oscillator generates a (relatively low-frequency) auxiliary carrier wave signal C'n which is multiplied by the multiplier MP1 using a factor A to produce the (high-frequency) carrier wave signal Cn. It is pointed out that it is also possible to have the oscillator O generate a very high-frequency signal C'n and then convert the latter into the carrier wave signal Cn by means of a frequency divider, which then replaces the multiplier MP1. In both cases, the result is achieved that a frequency spacing is produced between Cn and C'n which is such that the auxiliary carrier wave signal C'n can be separated from the modulated signal Mn (which is in the frequency range of Cn) at the subscriber end simply by filtering. In the mixer MX, the baseband video signal Sn and the carrier wave signal Cn are mixed with one another, resulting in a DSB/SC (DSB/SC = double sideband/ suppressed carrier) modulated signal M'n, of which modulated signal one sideband is suppressed to a limited extent by a band-pass filter ('vestigial sideband filter') FL1. The resulting modulated signal Mn is combined with the auxiliary carrier wave signal C'n and presented to the transmission line L.

At the subscriber end, the modulated signal Mn and the auxiliary carrier wave signal C'n presented via the line L are fed to two filters FL2 and FL3. FL2 is a narrow-band band-pass filter tuned to the frequency F'n of the auxiliary carrier wave signal C'n. FL3 is a high-pass filter which keeps back the auxiliary carrier wave signal C'n and lets the modulated signal Mn (whose frequency range is, after all, higher by a factor A since Fn=A*F'n) through. It is pointed out that, if the chosen auxiliary carrier wave frequency F'n were not a factor A lower, but a factor A higher, than the carrier wave frequency Fn, a low-pass filter would have to be used for FL3. Incidentally, in both cases, a band-pass filter suitable for letting Mn through with the exclusion of C'n could be chosen. The modulated signal Mn let through by FL3 is presented directly to the input of the subscriber's TV receiver. The modulated signal Mn can however only be demodulated therein if an associated carrier wave and a frequency Fn is present. This is provided by reconstruction from the auxiliary carrier wave C'n, in particular by means of a second multiplier MP2, which is identical to the first multiplier MP1 at the transmission end and which multiplies the frequency F'n of C'n by a factor A. The resultant carrier wave signal C''n therefore has the same frequency Fn as the original carrier wave signal Cn with which the video signal Sn was mixed and is therefore suitable for demodulating (in the subscriber's TV set) the modulated signal Mn.

To achieve the result that only entitled subscribers are able to demodulate the video signal Sn transmitted via channel n, the filters FL2 and FL3 and - the second multiplier MP2 - are sited in a terminal box which is not accessible to the subscribers and which incorporates, in addition, a switch SW which can only be operated by 'officials', either 'on site' or 'remotely'. Another possibility is to design the multiplier MP2 as a plug-in unit and to site it alone in the terminal box of the entitled subscribers. The ability to switch "remotely" is certainly a requirement if the system is used for a "pay per view" service in which the switch SW is closed only for a limited time, namely only during the broadcasting of a program which had been paid for.

## Claims

1. Method for transmitting signals, in particular TV signals, via FDM channels from a distribution station to selected subscriber terminals connected thereto, characterised in that, at the distribution station end, a signal (Sn) to be transmitted via one of the FDM channels (n) is mixed with a carrier wave signal (Cn) having a carrier wave frequency (Fn) unique to said FDM channel and the modulated signal (Mn) resulting therefrom, excluding said carrier wave signal itself, is transmitted to the subscriber end, together with an auxiliary carrier wave signal (C'n) having a frequency (F'n) which bears a fixed relationship (R) to the frequency (Fn) of said carrier wave signal (Cn), and at the subscriber end, only in the selected subscriber terminals, the auxiliary carrier wave signal (C'1) is converted back, to a carrier wave signal (C"n) having the original carrier wave frequency (Fn) of said FDM channel in accordance with the inverse (R⁻¹) ) of said fixed relationship (R).

2. Method according to Claim 1, characterised in that the auxiliary carrier wave frequency (F'n) is a multiple (A) of the carrier wave frequency (Fn).

3. Method according to Claim 1, characterised in that the auxiliary carrier wave frequency (F'n) is a fraction (1/A) of the carrier wave frequency (Fn).

4. Signal distribution system, comprising a distribution station, transmission means and subscriber terminals, a signal, in particular a TV signal, output by the distribution station, transmitted by the transmission means via an FDM channel and received by the subscriber terminals, to be passed through by selected subscriber terminals only, **characterised** by
the distribution station comprising a generator (GN), for generating a carrier wave signal (Cn), having a frequency (Fn) unique to the FDM channel, and also generating an auxiliary carrier wave signal (C'n), having a frequency (F'n) which bears a fixed relationship (R) to the frequency (Fn) of said carrier wave signal (Cn); the distribution station comprising, moreover, a mixing device (MX) for mixing the carrier wave signal (Cn) with the signal (Sn) to be transmitted to the subscriber terminals, resulting in a modulated signal (Mn);
the transmission means transmitting the auxiliary carrier wave signal (C'n), as well as the modulated signal (Mn) excluding said carrier wave signal to the subscriber terminal;
each selected subscriber terminal comprising a conversion device (FC), for converting, in accordance with the inverse (R⁻¹) of said fixed relationship (R), the received auxiliary carrier wave signal (C'1) into a carrier wave replica signal (C"n) having a frequency (Fn) equal to the frequency of the carrier wave signal generated by the generator (GN) in the distribution station;
each subscriber terminal, moreover, comprising a demodulator (DMX), only in each selected subscriber terminal, comprising said conversion device (FC), being able to demodulate the received modulated signal (Mn), using the carrier wave replica signal (C"n), output by the conversion device (FC).

## Patentansprüche

1. Verfahren zur Übertragung von Signalen, insbesondere von Fernsehsignalen, über FDM-Kanäle von einer Verteilerstation ausgehend hin zu mit dieser verbundenen ausgewählten Teilnehmeranschlüssen, **dadurch gekennzeichnet**, dass am verteilerstationsseitigen Ende ein über einen der FDM-Kanäle (n) zu übertragendes Signal (Sn) mit einem Trägerwellensignal (Cn) gemischt wird, das eine Trägerwellenfrequenz (Fn) aufweist, die nur für den besagten FDM-Kanal vergeben ist, und dass das daraus entstehende modulierte Signal (Mn) ausschliesslich des Trägerwellensignals selber zum Teilnehmer hin mit einem Hilfsträgerwellensignal (C'n) übertragen wird, welches eine Frequenz (F'n) aufweist, die in einer festen funktionellen Beziehung (R) zu der Frequenz (Fn) des besagten Trägerwellensignals (Cn) steht, und dass an dem teilnehmerseitigen Ende nur an den ausgewählten Teilnehmeranschlüssen das Hilfsträgerwellensignal (C'n) zu einem Trägerwellensignal (C"n) zurückgewandelt wird, welches die originale Trägerwellenfrequenz (Fn) des besagten FDM-Kanals in Übereinstimmung mit dem Inversen (R⁻¹) der besagten festen funktionellen Beziehung (R) aufweist.

2. Verfahren nach Anspruch 1, dadurch gekennzeichnet, dass die Frequenz der Hilfsträgerwelle (F'n) ein Vielfaches (A) der Frequenz der Trägerwelle (Fn) ist.

3. Verfahren nach Anspruch 1, dadurch gekennzeichnet, dass die Frequenz der Hilfsträgerwelle (F'n) ein Teiler (1/A) der Frequenz der Trägerwelle (Fn) ist.

4. System zur Verteilung von Signalen mit einer Verteilerstation, mit Übertragungsmitteln und mit Teilnehmeranschlüssen, mit einem Signal, insbesondere einem Fernsehsignal, das ein Ausgangssignal der Verteilerstation ist, das durch die Übertragungsmittel über einen FDM-Kanal übertragen und an den Teilnehmeranschlüssen empfangen wird und das nur durch ausgewählte Teilnehmeranschlüsse hindurchzuführen ist, **dadurch gekennzeichnet**, dass die Verteilerstation einen Generator (GN) umfasst, um ein Trägerwellensignal (Cn), welches eine Frequenz (Fn) aufweist, die nur für den besagten FDM-Kanal vergeben ist, und ein Hilfsträgerwellensignal (C'n) zu erzeugen, welches eine Frequenz (F'n) aufweist, die in einer festen funktionellen Beziehung (R) zu der Frequenz (Fn) des Trägerwellensignals (Cn) steht, dass die Verteilerstation darüber hinaus einen Mischer (MX) umfasst, um das Trägerwellensignal (Cn) mit dem an die Teilnehmeranschlüsse zu übertragende Signal (Sn) zu mischen und ein moduliertes Signal (Mn) zu erhalten, dass die Übertragungsmittel das Hilfsträgerwellensignal (C'n) sowie das modulierte Signal (Mn) ohne das Trägerwellensignal (Cn) an jeden Teilnehmeranschluss übertragen, dass jeder ausgewählte Teilnehmeranschluss über eine Wandlereinrichtung (FC) verfügt, um das empfangene Hilfsträgerwellensignal (C'n) in eine Nachbildung (C''n) des Trägerwellensignals in Übereinstimmung mit dem Inversen (R⁻¹) der besagten festen funktionellen Beziehung (R) umzuwandeln, wobei die Nachbildung (C"n) eine Frequenz (Fn) aufweist, die der Frequenz des von dem Generator (GN) in der Verteilerstation erzeugten Trägerwellensignals entspricht, dass jeder Teilnehmeranschluss darüber hinaus einen Demodulator (DMX) und ausschliesslich in den ausgewählten Teilnehmeranschlüssen eine Wandlereinrichtung (FC) aufweist, mit der es möglich ist, das empfangene modulierte Signal (Mn) unter Einsatz der von der Wandlereinrichtung (FC) abgegebenen Nachbildung (C''n) des Trägerwellensignals zu demodulieren.

## Revendications

1. Procédé pour émettre, via des canaux à multiplexage par répartition de fréquence (FDM), à partir d'un poste de distribution, des signaux, en particulier des signaux de télévision, vers des terminaux d'abonnés déterminés qui y sont reliés, caractérisé en ce que, du côté poste de distribution, un signal (Sn) à transmettre via l'un des canaux à multiplexage par répartition de fréquence (n) est mélangé avec une onde porteuse (Cn) ayant une fréquence unique d'onde porteuse (Fn) pour ledit canal à multiplexage par répartition de fréquence ; et en ce que le signal modulé (Mn) qui en résulte, en excluant ledit signal d'onde porteuse lui-même est transmis au côté abonné, en même temps qu'un signal d'onde porteuse auxiliaire (C'n) ayant une fréquence (F'n) qui a une relation fixe (R) avec la fréquence (Fn) dudit signal d'onde porteuse (Cn) ; et en ce que, du côté abonné, le signal d'onde porteuse auxiliaire (C'n) est reconverti, selon l'inverse (R⁻¹) de ladite relation fixe (R), seulement dans les terminaux d'abonnés déterminés, en un signal d'onde porteuse (C"n) ayant la fréquence d'onde porteuse d'origine (Fn) dudit canal à multiplexage par répartition de fréquence.

2. Procédé selon la revendication 1, caractérisé en ce que la fréquence d'onde porteuse auxiliaire (F'n) est un multiple (A) de la fréquence d'onde porteuse (Fn).

3. Procédé selon la revendication 1, caractérisé en ce que la fréquence d'onde porteuse auxiliaire (F'n) est une fraction (1/A) de la fréquence d'onde porteuse (Fn).

4. Système de distribution de signaux, comprenant un poste de distribution, un moyen de transmission et des terminaux d'abonnés, dans lequel un signal, en particulier un signal de télévision, sorti par le poste de distribution, transmis par le moyen de transmission via un canal à multiplexage par répartition de fréquence et reçu par les terminaux d'abonnés, doit passer seulement à travers des terminaux d'abonnés déterminés, caractérisé :
en ce que le poste de distribution comprend un générateur (GN), pour produire un signal d'onde porteuse (Cn), ayant une fréquence unique (Fn) pour le canal à multiplexage par répartition de fréquence, et pour produire également un signal d'onde porteuse auxiliaire (C'n), ayant une fréquence (F'n) qui a une relation fixe (R) avec la fréquence (Fn) dudit signal d'onde porteuse (Cn); le poste de distribution comprenant, de plus, un dispositif de mélange (MX) pour mélanger le signal d'onde porteuse (Cn) avec le signal (Sn) à émettre vers les terminaux d'abonnés, ce dont il résulte un signal modulé (Mn) ;
en ce que le moyen de transmission transmet, vers le terminal d'abonné, le signal d'onde porteuse auxiliaire (C'n), de même que le signal modulé (Mn), en excluant ledit signal d'onde porteuse ;
en ce que chaque terminal d'abonné déterminé comprend un dispositif de conversion (FC) pour convertir, selon l'inverse (R⁻¹) de ladite relation fixe (R), le signal d'onde porteuse auxiliaire reçu (C'n) en un signal de réplique d'onde porteuse (C"n) ayant une fréquence (Fn) égale à la fréquence du signal d'onde porteuse produit par le générateur (GN) du poste de distribution ;
en ce que chaque terminal d'abonné comprend, de plus, seulement dans chaque terminal d'abonné déterminé, un démodulateur (DMX), comprenant ledit dispositif de conversion (FC), pouvant démoduler le signal modulé reçu (Mn), en utilisant le signal de réplique d'onde porteuse (C"n), sorti par le dispositif de conversion (FC).
